(19) Europäisches Patentamt
European Patent Office
Office européen des brevets

(11) Veröffentlichungsnummer: **0 198 206**
**B1**

(12) # EUROPÄISCHE PATENTSCHRIFT

(45) Veröffentlichungstag der Patentschrift: **26.10.88**

(51) Int. Cl.⁴: **C 09 B 29/033,** D 06 P 1/39

(21) Anmeldenummer: **86103101.1**

(22) Anmeldetag: **08.03.86**

(54) **Azofarbstoffe.**

(30) Priorität: **22.03.85 DE 3510410**

(43) Veröffentlichungstag der Anmeldung:
**22.10.86 Patentblatt 86/43**

(45) Bekanntmachung des Hinweises auf die Patenterteilung:
**26.10.88 Patentblatt 88/43**

(84) Benannte Vertragsstaaten:
**CH DE FR GB LI**

(56) Entgegenhaltungen:
**GB - A - 837 086**
**GB - A - 2 011 937**

**CHEMICAL ABSTRACTS, Band 101, Nr. 22, November 1984, Seite 83, Zusammenfassung Nr. 193660a, Columbus, Ohio, US; & DD - A - 157 911 (HARRY SCHAEFER et al.) 15-12-1982**

(73) Patentinhaber: **BAYER AG, Konzernverwaltung RP Patentabteilung, D-5090 Leverkusen 1 Bayerwerk (DE)**

(72) Erfinder: **Heidenreich, Holger, Dr., Andreas-Gryphius-Strasse 22, D-5000 Köln 80 (DE)**
Erfinder: **Wolfrum, Gerhard, Dr., Domblick 17, D-5090 Leverkusen 3 (DE)**

**EP 0 198 206 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung sind Azofarbstoffe der Formel

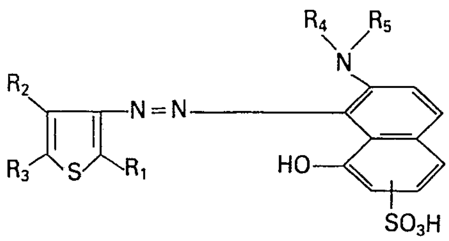

worin
$R_1$ CN, COOX, oder $CONH_2$,
$R_2$ H, Alkyl oder Aryl,
$R_3$ Aryl oder Alkyl,
$R_4$ H, Alkyl, Cyclohexyl oder Aryl,
$R_5$ Wasserstoff oder Alkyl und
X Alkyl oder Cyclohexyl bedeuten,
wobei die genannten Alkylreste unsubstituiert sind und 1 bis 4 C-Atome aufweisen und die Arylreste Phenylreste sind die 1- bis 3mal durch $C_1$–$C_4$-Alkyl, Cl oder $C_1$–$C_4$-Alkoxy oder 1mal durch $SO_3H$ substituiert sein können.

Die neuen Farbstoffe können sowohl in Form der freien Säure als auch in Form ihrer Alkali- oder Ammoniumsalze vorliegen.

Im Rahmen dieser Formel gelten als ganz besonders bevorzugt Farbstoffe der Formel

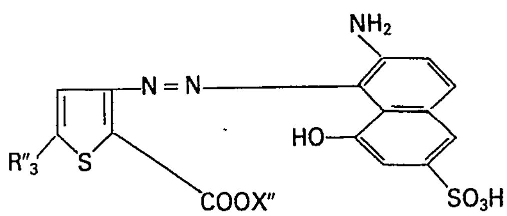
(II)

worin
X″ für $C_1$–$C_4$-Alkyl oder Cyclohexyl und

R″$_3$ für 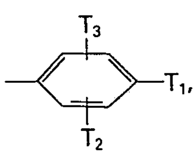 oder vorzugsweise für $C_1$–$C_4$-Alkyl stehen,

wobei
$T_{1-3}$ für $CH_3$, Cl, $OCH_3$ oder $OC_2H_5$ stehen.
Aus diesen Farbstoffen sind wiederum solche Verbindungen der angegebenen Formel hervorzuheben, worin
X″ für $C_2H_5$, n-Propyl oder Cyclohexyl und
R″$_3$ für $CH_3$, $C_2H_5$ oder t-$C_4H_9$ stehen.

Die neuen Farbstoffe erhält man z.B. dadurch, dass man diazotierte 3-Aminothiophene der Formel

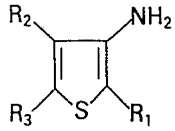
(III)

auf Kupplungskomponenten der Formel

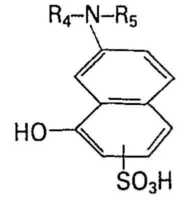
(IV)

in an sich bekannter Weise (vgl. z.B. GB-A 2 011 937) kuppelt.

Die 3-Aminothiophene der Formel III sind z.T. aus GB-A 837 086 bekannt, worin auch deren Eignung zum Aufbau von Azofarbstoffen erwähnt wird. Jedoch ist dieser Literaturstelle nicht zu entnehmen, dass diese Aminothiophene in Kombination mit den Kupplungskomponenten IV besonders wertvolle Farbstoffe liefern.

Die 3-Aminothiophene der Formel III, die nicht bekannt sind, können nach in der Literatur beschriebenen Methoden leicht hergestellt werden (vgl. «The Chemistry of Heterocyclic Compounds», Thiophene and its Derivatives; Vol. 44, p. 1 ff.).

So gewinnt man einige dieser Diazokomponenten beispielsweise gemäss «Synthesis-Communications», March 1984, 275 ff. durch Umsetzung von Verbindungen der Formel

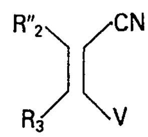
(V)

($R''_2$ = H, Alkyl oder Aryl; V = Cl, Br)
mit Verbindungen der Formel

$R_1$–$CH_2$–SH (VI)

in Gegenwart von Basen.

Eine weitere Methode zur Herstellung von (IV) entspricht dem Verfahren gemäss DE-PS 1 055 007, welches dadurch gekennzeichnet ist, dass man Verbindungen der Formel

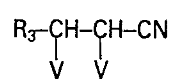
(VII)

mit Verbindungen der Formel

HS–$CH_2$–COOX (VIII)

in Gegenwart von Basen kondensiert.

Als basische Kondensationsmittel kommen vorzugsweise Alkalialkoholate in Betracht.

Die neuen Säurefarbstoffe sind sehr farbstark und eignen sich zum Färben von amidgruppenhaltigen natürlichen und synthetischen Fasermaterialien, vorzugsweise solchen aus Wolle, Seide und synthetischen Superpolyamiden.

Man erhält egale Färbungen mit guten Allgemeinechtheiten, insbesondere guten Nass- und Lichtechtheiten.

Beispiel 1

7,16 g 5-Phenyl-3-amino-2-ethoxycarbonyl-thiophen werden in einer Mischung aus 30 ml Essigsäure, 5 ml Propionsäure und 30 ml 80%iger Phosphorsäure gelöst. Man kühlt die Lösung auf -5°C ab und diazotiert bei dieser Temperatur mit 9,3 ml einer 40%igen Nitrosylschwefelsäure. Nach 45 Minuten gibt man die Reaktionslösung auf Eis und entfernt den Nitritüberschuss mit Amidosulfonsäure. Diese Diazoniumsalzlösung lässt man zu einer auf 5°C gekühlten Lösung von 7,73 g 2-Amino-8-hydroxynaphthalin-6-sulfonsäure in 100 ml Dimethylformamid, die zuvor durch Zugabe von ca. 5 ml konzentrierter Salzsäure auf pH 1 gestellt wurde, laufen. Zur Vervollständigung der Kupplung stellt man langsam mit Sodalösung einen pH-Wert von 1,5 ein. Es wird 3 Stunden nachgerührt und dann das Umsetzungsprodukt abgesaugt und getrocknet. Man erhält 12,5 g eines roten Farbstoffes der Formel

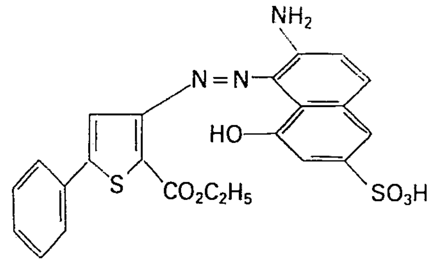

Er färbt synthetische Polyamidfasern (PA) aus wässriger Lösung in einem klaren blaustichigen Rot. Auf Wolle erhält man damit ein klares, etwas weniger blaustichiges Rot. ($\lambda_{max}$ in DMF: 563 nm)

In analoger Weise werden die in folgender Tabelle aufgeführten Farbstoffe I erhalten, wobei K =

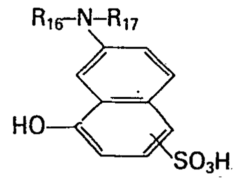

| | $R_1$ | $R_2$ | $R_3$ | $R_{16}$ | $R_{17}$ | Stellung von $SO_3H$ | Farbton auf PA |
|---|---|---|---|---|---|---|---|
| 2 | $CO_2CH_3$ | H | $C_6H_5$ | H | H | 6 | blaust. rot |
| 3 | $CO_2C_3H_7$ | H | $C_6H_5$ | H | H | 6 | blaust. rot |
| 4 | $CO_2C_2H_5$ | H | $4CH_3{-}C_6H_4$ | H | H | 6 | blaust. rot |
| 5 | $CO_2CH_3$ | H | $4CH_3O{-}C_6H_4$ | H | H | 6 | blaust. rot |
| 6 | $CO_2CH_3$ | H | $4{-}Cl{-}C_6H_4$ | H | H | 6 | blaust. rot |
| 7 | $CO_2C_3H_5$ | H | $4{-}Cl{-}3{-}Cl{-}C_6H_3$ | H | H | 6 | blaust. rot |
| 8 | $CONH_2$ | H | $C_6H_5$ | H | H | 6 | blaust. rot |
| 9 | $CO_2C_3H_7$ | H | $CH_3$ | H | H | 6 | blaust. rot |
| 10 | CN | H | $CH_3$ | H | H | 6 | blaust. rot |
| 11 | CN | H | $C_6H_5$ | H | H | 6 | blaust. rot |
| 12 | CN | H | $C_6H_5$ | H | H | 5 | blaust. rot |
| 13 | $CO_2C_2H_5$ | H | $4{-}Cl{-}C_6H_4$ | H | H | 5 | blaust. rot |
| 14 | $CO_2C_3H_7$ | H | $CH_3$ | H | $CH_3$ | 5 | blaust. rot |
| 15 | $CO_2C_2H_5$ | H | $CH_3$ | H | $CH_3$ | 6 | blaust. rot |
| 16 | $CO_2CH_3$ | H | $C_6H_5$ | $CH_3$ | $CH_3$ | 6 | blaust. rot |
| 17 | $CO_2CH_3$ | $CH_3$ | $4{-}Cl{-}C_6H_4$ | H | H | 6 | blaust. rot |

Beispiel 18

5,36 g 5-Methyl-3-amino-2-ethoxycarbonyl-thiophen werden in 100 ml Essigsäure und 20 ml konzentrierter Salzsäure bei 0°C mit einer Lösung von 2,2 g Natriumnitrit in 80 ml Wasser diazotiert. Nach 45 Minuten entfernt man mit Amidosulfonsäure den Nitritüberschuss und kuppelt in der oben beschriebenen Weise auf 7,73 g 2-Amino-8-hydroxy-naphthalin-6-sulfonsäure. Man isoliert 11 g eines roten Pulvers der Formel

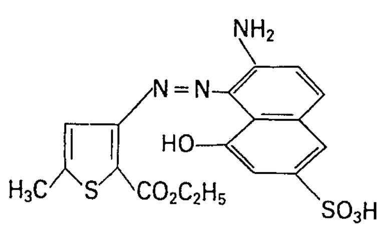

das Polyamidfasern und Wolle aus wässriger Lösung in einem klaren blaustichigen Rot färbt ($\lambda_{max}$: 562 nm in DMF).

Das als Diazokomponente verwendete 5-Methyl-3-amino-2-ethoxycarbonyl-thiophen wird wie folgt hergestellt:

Man löst 11,5 g Natrium in 350 ml Ethanol und gibt dann 62,5 g α-Mercapto-essigsäureethylester hinzu. In diese Lösung tropft man dann eine Mischung von 50,75 g β-Chlor-crotonsäurenitril in 50 ml Ethanol. Man kocht 1 Stunde unter Rückfluss, trägt auf Eis aus und saugt den Niederschlag ab. Die Verbindung zeigt folgende charakteristische IR-Absorptionslinien in KBr 1660, 3400 und 3350 $cm^{-1}$ (Schmp.: 41°C).

**Patentansprüche**

1. Azofarbstoffe der Formel

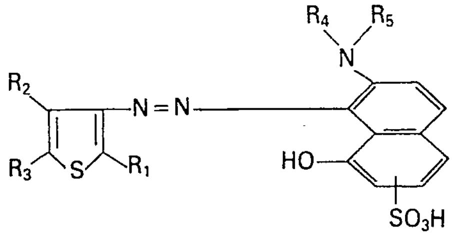

worin
$R_1$ CN, COOX, oder $CONH_2$,
$R_2$ H, Alkyl oder Aryl,
$R_3$ Aryl oder Alkyl,
$R_4$ H, Alkyl, Cyclohexyl oder Aryl,
$R_5$ Wasserstoff oder Alkyl und
X Alkyl oder Cyclohexyl
bedeuten, wobei die genannten Alkylreste unsubstituiert sind und 1 bis 4 C-Atome aufweisen und die Arylreste Phenylreste sind, die 1- bis 3mal durch $C_1$–$C_4$-Alkyl, Cl oder $C_1$–$C_4$-Alkoxy oder 1-mal durch $SO_3H$ substituiert sein können.

2. Azofarbstoffe gemäss Anspruch 1 der Formel

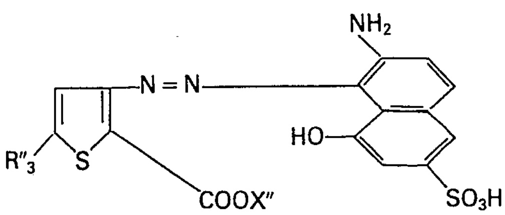

worin
X'' für $C_1$–$C_4$-Alkyl oder Cyclohexyl und

R''$_3$ für 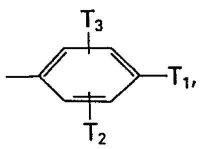 oder vorzugsweise für $C_1$–$C_4$-Alkyl stehen, wobei

$T_{1-3}$ für $CH_3$, Cl, $OCH_3$ oder $OC_2H_5$ stehen.

3. Azofarbstoffe gemäss Anspruch 2, dadurch gekennzeichnet, dass
X'' für $C_2H_5$, $C_3H_7$, oder Cyclohexyl
R''$_3$ für $CH_3$, $C_2H_5$ oder t-$C_4H_9$ stehen.

4. Azofarbstoff gemäss Anspruch 1 der Formel

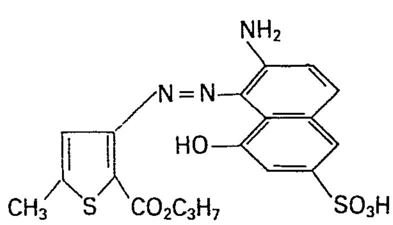

5. Verfahren zum Färben von amidgruppenhaltigen Fasermaterialien, dadurch gekennzeichnet, dass man Farbstoffe gemäss Ansprüchen 1 bis 4 verwendet.

**Claims**

1. Azo dyestuffs of the formula

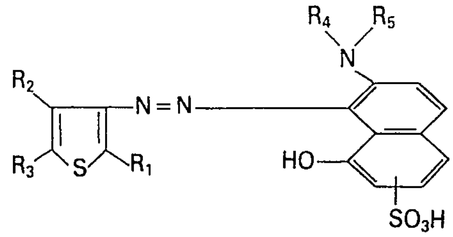

wherein
$R_1$ denotes CN, COOX or $CONH_2$
$R_2$ denotes H, alkyl or aryl,
$R_3$ denotes aryl or alkyl,
$R_4$ denotes H, alkyl, cyclohexyl or aryl,
$R_5$ denotes hydrogen or alkyl and
X denotes alkyl or cyclohexyl,
the stated alkyl radicals being unsubstituted and preferably having 1 to 4 C atoms and the aryl radicals being phenyl radicals which can be mono-, di- or trisubstituted by $C_1$–$C_4$-alkyl, Cl or $C_1$–$C_4$-alkoxy or monosubstituted by $SO_3H$.

2. Azo dyestuffs according to Claim 1 of the formula

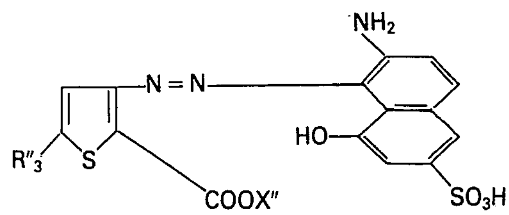

wherein
X'' stands for $C_1$–$C_4$-alkyl or cyclohexyl and

R''$_3$ stands for 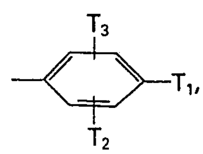 or preferably for $C_1$–$C_4$-alkyl,

where
$T_{1-3}$ stand for $CH_3$, Cl, $OCH_3$ or $OC_2H_5$.

3. Azo dyestuffs according to Claim 2, characterised in that
X'' stands for $C_2H_5$, $C_3H_7$ or cyclohexyl and
R''$_3$ stands for $CH_3$, $C_2H_5$ or t-$C_4H_9$.

4. Azo dyestuff according to Claim 1 of the formula

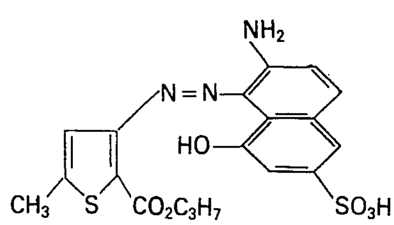

5. Process for dyeing amido-containing fibre materials, characterised in that dyestuffs according to Claims 1 to 4 are used.

**Revendications**

1. Colorants azoïques de formule

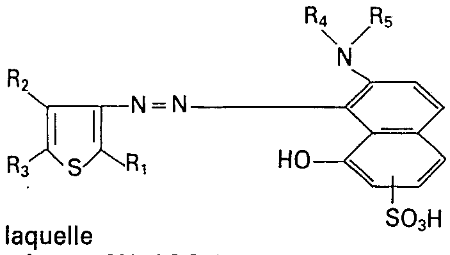

dans laquelle
$R_1$ représente CN, COOX ou $CONH_2$,
$R_2$ représente H, alkyle ou aryle,
$R_3$ représente aryle ou alkyle,
$R_4$ représente H, alkyle, cyclohexyle ou aryle,
$R_5$ représente l'hydrogène ou un alkyle et
X représente alkyle ou cyclohexyle,
les restes alkyles mentionnés étant des restes alkyles en $C_1$–$C_4$ non substitués et les restes aryles étant des restes phényles qui peuvent être substitués 1 à 3 fois par alkyle en $C_1$–$C_4$, Cl ou alcoxy en $C_1$–$C_4$ ou 1 fois par $SO_3H$.

2. Colorants azoïques selon la revendication 1 de formule

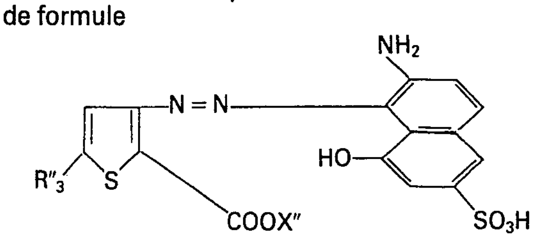

dans laquelle
X″représente alkyle en $C_1$–$C_4$ ou cyclohexyle et

R″$_3$ représente 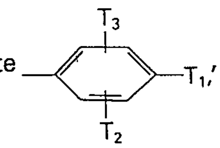 ou de préférence alkyle en $C_1$–$C_4$,

$T_{1-3}$ représente $CH_3$, Cl, $OCH_3$ ou $OC_2H_5$.

3. Colorants azoïques selon la revendication 2, caractérisés en ce que
X″représente $C_2H_5$, $C_3H_7$ ou cyclohexyle,
R″$_3$ représente $CH_3$, $C_2H_5$ ou t-$C_4H_9$.

4. Colorant azoïque selon la revendication 1 de formule

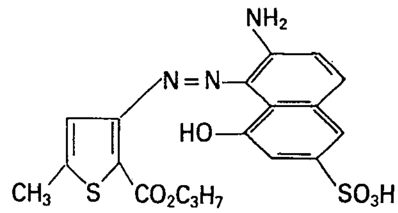

5. Procédé pour la teinture de matières fibreuses contenant des groupes amides, caractérisé en ce que l'on utilise des colorants selon les revendications 1 à 4.